# EUROPÄISCHE PATENTSCHRIFT

(11) **EP 2 652 567 B1**
(45) Veröffentlichungstag und Bekanntmachung des Hinweises auf die Patenterteilung: **25.02.2015**
(21) Anmeldenummer: 11817463.0
(22) Anmeldetag: 19.12.2011
(51) Int. Cl.: G05B 19/19, B21D 55/00, B21D 5/00

(54) **STEUER- UND REGELVORRICHTUNG FÜR EINE BIEGEPRESSE**
OPEN- AND CLOSED-LOOP CONTROL DEVICE FOR BENDING PRESS
DISPOSITIF DE COMMANDE ET DE RÉGULATION POUR UNE PRESSE DE PLIAGE

(30) Priorität: 17.12.2010 AT 20882010
(43) Veröffentlichungstag der Anmeldung: 23.10.2013
(73) Patentinhaber: Trumpf Maschinen Austria GmbH & CO. KG., 4061 Pasching (AT)
(72) Erfinder: SPERRER, Gerhard, A-4554 Oberschlierbach (AT)
(74) Vertreter: Burger, Hannes
(86) Internationale Anmeldenummer: PCT/AT2011/050054
(87) Internationale Veröffentlichungsnummer: WO 2012/079109

(56) Entgegenhaltungen:
- US-A- 4 656 862
- US-A- 4 983 901
- US-A1- 2008 007 417

## Beschreibung

Die Erfindung betrifft eine Steuer- und Regelvorrichtung für eine Biegepresse wie sie im Oberbegriff des Anspruches 1 beschrieben ist, sowie ein Verfahren zum Betrieb der Biegepresse mit der Steuer- und Regelvorrichtung gemäß dem Oberbegriff des Anspruches 15.

Aus dem Stand der Technik ist für den Betrieb einer Biegepresse zur Durchführung eines Umformvorganges an einem Werkteil ein Steuerpult und/oder ein mit einer Steuer- und Kontrolleinrichtung der Biegepresse leitungsverbundenes oder drahtlos kommunikationsverbundenes, mit einem Fuß über ein pedalartiges Stellelement zu bedienendes Zwei- oder Dreistellungs- Steuergerät bekannt. Aus Gründen erhöhter Sicherheit für eine Bedienperson wird vorwiegend ein Dreistellungs- Schaltgerät mit einer ersten Stellung des pedalartiges Stellelementes für einen Stillstand des verstellbaren Pressenbalkens in einer Ausgangslage, einem Regelbereich bei der ein Steuerprogramm für den Betrieb abgerufen wird und in dem durch eine Verstellung des Stellelementes die Verstellgeschwindigkeit des verstellbaren Pressenbalkens manuell regelbar ist und einer dritten Stellung des Stellelementes bei der im Falle eine Gefahr für den Bediener oder eines gefährlichen Betriebszustand ein Not-Stopp des verstellbaren Pressenbalkens bewirkt wird. Nachteilig bei einem derartigen Schaltgerät ist, dass während eines bis zum Erreichen der den Not- Stopp bewirkenden Stellung des Stellelementes zurück zu legenden Verstellweges eine Zeitverzögerung, während der der Pressenbalken weiter verstellt wird, entsteht und darüber hinaus die Verstellgeschwindigkeit des verstellbaren Pressenbalkens noch gesteigert wird. Eine derartige Biegepresse ist etwa aus US 4656862 A bekannt.

Aufgabe der Erfindung ist es eine Steuer- und Regelvorrichtung für eine Biegepresse zu schaffen, womit unter Wahrung der Sicherheitsvorgaben eine manuelle Einflussnahme auf einen werkteilspezifisch vorprogrammierten Steuerungsablauf durch eine Bedienkraft erreicht wird.

Diese Aufgabe der Erfindung wird durch die im Kennzeichenteil des Anspruches 1 wiedergegebenen Merkmale erreicht. Der Vorteil dabei ist, dass damit unmittelbar aus einer Verstellbewegung eines vom Bediener der Biegepresse betätigten Stellelementes Steuerungssignale für eine Regelung einer Antriebsanordnung für den Verstellvorgang des Pressenbalkens generiert werden und aus einer Erfassung und Bewertung eines Bewegungsprofiles des Stellelementes und permanente Abgleichung mit einem Vorgabeprofil, bzw. einem vorgegebenen Schwellenwert, unabhängig von einer Momentanstellung des Stellelementes und nahezu ohne einer Reaktionszeit und damit ohne Nachlauf des Pressenbalkens oder vorhergehender Änderung der Verstellgeschwindigkeit ein Not- Stopp bei einer das Vorgabeprofil bzw. den Schwellenwert übersteigenden Verstellbewegung des Stellelementes aktiviert wird und damit ein sicherer und rationeller Betrieb der Biegepresse erreicht wird.

Vorteilhaft ist dabei eine Ausbildung nach Anspruch 2, wodurch ein Steuer- und Regeleinheit erreicht wird die nachträglich für eine Aufrüstung bereits bestehender Steuer- und Kontrolleinrichtüngen von Biegepressen geeignet ist.

Möglich ist aber auch eine Ausbildung nach Anspruch 3, wodurch wesentliche Komponenten der Steuer- und Regeleinheit in der Steuer- und Kontrolleinrichtung integriert sind.

Von Vorteil sind aber auch Ausbildungen wie sie in den Ansprüchen 4 bis 10 beschrieben sind, weil dadurch wesentliche Varianten für anwenderbezogene Steuerungsvorgaben erreicht werden.

Vorteilhaft ist dabei eine Ausbildung nach den Ansprüchen 11 bis 13, wodurch ein einfacher und langzeittauglicher mechanischer Aufbau der Steuer- und Regelvorrichtung erreicht wird.

Schließlich ist aber auch eine Ausbildung nach Anspruch 14 vorteilhaft, weil dadurch eine rasche Positionierung der Steuer- und Regelvorrichtung an die jeweilige Bedienerposition erreicht wird und eine, ein Sicherheitsrisiko, z.B. Stolperfalle, Kabelschaden etc., darstellende Kabelverbindung entfallen kann.

Die Aufgabe der Erfindung wird aber auch durch ein Verfahren nach den kennzeichnenden Maßnahmen des Anspruches 15 gelöst.

Vorteilhaft sind aber auch Maßnahmen gemäß den Ansprüchen 16 bis 18, weil dadurch wesentliche Varianten für anwenderbezogene Steuerungsvorgaben erreicht werden.

Möglich sind aber auch die vorteilhaften Maßnahmen gemäß dem Anspruch 19, wonach das Beschleunigungsprofil des Stellelementes in einem Prozessor des Logikmoduls aus einer Funktion von Delta "v(Geschwindigkeit)" zu Delta "t(Zeit)" aus dem Bewegungsprofil des Stellelementes erstellt und mit dem vorgegebenen Schwellenwert für die Verstellbewegung des Stellelementes verglichen wird und bei einer Überschreitung des Schwellenwertes in der Erfassungs- und Auswerteschaltung das Steuerungssignal als Not- Stopp Signal generiert und an die Steuer- und Kontrolleinrichtung der Biegepresse übermittelt wird., weil dadurch ein von einer Stellbewegung des Stellelementes bewirkter Regelverlauf einen unmissverständlichen Steuerungsparameter für ein Not- Stopp Signal für die Antriebssteuerung der Verstellbewegung des Pressenbalkens bildet.

Schließlich sind aber auch Maßnahmen gemäß dem Anspruch 20 vorteilhaft, wonach im Logikmodul das Beschleunigungsprofil des Stellelementes durch Messwerte eines Beschleunigungsmesssensor, insbesondere eines mikro-elektro-mechanischen Systems erstellt wird, und damit eine Signalauswertung und die Bewegungsdetektierung des Stellelementes vereinfacht wird.

Zum besseren Verständnis der Erfindung wird diese anhand der nachfolgenden Figuren näher erläutert.

Es zeigen jeweils in stark schematisch vereinfachter Darstellung:
- Fig. 1: eine Biegepresse mit der erfindungsgemäßen Steuer- und Regelvorrichtung;
- Fig. 2: die erfindungsgemäße Steuer- und Regelvorrichtung, teilweise geschnitten;
- Fig. 3: ein Diagramm für die Geschwindigkeitsregelung mit der erfindungsgemäßen Steuer- und Regelvorrichtung für den verstellbaren Pressenbalken der Biegepresse;
- Fig. 4: ein Funktionsschema der erfindungsgemäßen Steuer- und Regelvorrichtung;
- Fig. 5: ein Diagramm für ein Bewegungsprofil eines Stellelementes der erfindungsgemäßen Steuer- und Regelvorrichtung;
- Fig. 6: eine andere Ausbildung der erfindungsgemäßen Steuer- und Regelvorrichtung, teilweise geschnitten;
- Fig. 7: eine weitere Ausbildung der erfindungsgemäßen Steuer- und Regelvorrichtung, teilweise geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

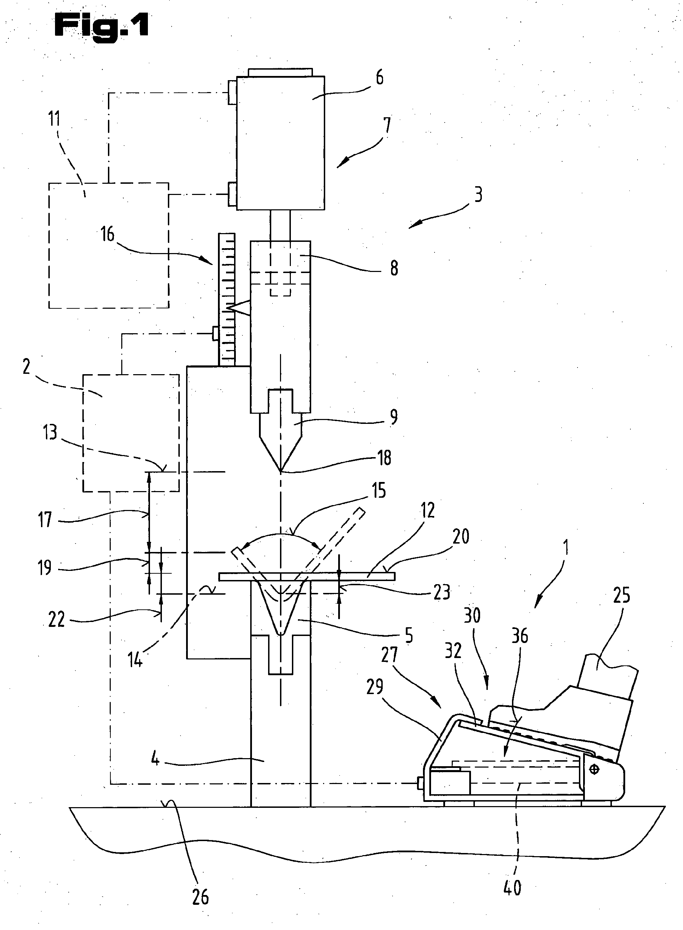

In der Fig. 1 ist eine Steuer- und Regelvorrichtung 1, die mit einer Steuer- und Kontrolleinrichtung 2 einer Biegepresse 3 kommunikationsverbunden ist, gezeigt.

Die Biegepresse 3 ist vereinfacht dargestellt und weist einen feststehenden Pressenbalken 4 mit einem Biegewerkzeug 5 und einen relativ dazu mit einem Antriebsmittel 6 einer Antriebsanordnung 7 verstellbaren Pressenbalken 8, der ebenfalls mit einem Biegewerkzeug 9 bestückt ist, auf. Das Antriebsmittel 6 für die Verstellung des Pressenbalkens 8 ist nach dem gezeigten Ausführungsbeispiel ein Hydraulikzylinder 10 der über ein Hydrauliksystem 11 mit einem Druckmedium beaufschlagt wird. Selbstverständlich sind auch andere Antriebsanordnungen 7, wie beispielsweise ein elektromotorischer Spindeltrieb, Exzentertrieb etc. für den Antrieb des Pressenbalkens 8 möglich.

Die Ansteuerung des Hydrauliksystems 11, bzw. eines Elektroantriebes erfolgt über die Steuer- und Kontrolleinrichtung 2 nach einem entsprechend einem vorgesehenen Umformvorgang für ein Werksteil 12 vorgegebenen Steuerprogramm, das manuell durch eine Bedienkraft über die Steuer- und Regelvorrichtung 1 gestartet und abgerufen wird, wobei über die Bedienung und durch die Ausbildung der Steuer- und Regelvorrichtung 1 eine manuelle Einflussnahme auf den Steuerungsvorgang vorgesehen ist, wie noch später im Detail beschrieben.

Nach dem Abruf eines Verstellzyklus zum Umformen des zwischen den Biegewerkzeugen 5, 9 eingelegten Werkteils 12 erfolgt ausgehend von einer oberen Endlage 13 des Pressenbalkens 8 die Verstellung in eine untere Endlage 14 bei der das Biegewerkzeug 9 des Verstellbaren Pressenbalkens 8 in das Biegewerkzeug 5 des feststehenden Pressenbalkens 4 auf eine vorgesehene Eintauchtiefe eintaucht und dabei das Werkteil 12 winkelförmig umgeformt wird, wonach ein Rückhub in die obere Endlage 13 erfolgt.

Die untere Endlage 14 ist dabei abhängig von der Werkzeuggeometrie der Biegewerkzeuge 5, 9, einem vorgesehenen Abkantwinkel 15 und wird programmmäßig für das Werksteil 12 und beispielsweise über ein mit der Steuer- und Kontrolleinrichtung 2 verbundenes Wegmesssystem 16 gesteuert.

Die Verstellung des Pressenbalkens 8 mit dem Werkzeug 9 über dessen Gesamthub zwischen der oberen Endlage 13 und der unteren Endlage 14 ist steuerungsmäßig unterteilt in einen Eilhubbereich 17, mit dem eine Werkzeugspitze 18 bis auf einen Abstand 19 an eine Oberseite 20 des Werkstückst 12 angestellt wird, einen Anstellhub 21, nach dem die Werkzeugspitze 18 auf die Oberseite 20 des Werkstücks 12 auftrifft und einen Umformhub 22, bei dem die Werkzeugspitze 18 um eine Eintauchtiefe 23 in eine V-förmige Matritzenöffnung 24 eintaucht, und damit die untere Endlage 14 erreicht wird.

Ausgehend von der unteren Endlage 14 erfolgt ein ebenfalls gesteuerter Rückhub des Pressenbalkens 8, eventuell nach einem Entlastungshub und nachfolgendem Rückhub bis in die obere Endlage 13, womit ein Verstellzyklus abgeschlossen ist.

Gestartet bzw. ausgelöst wird der Verstellzyklus nach dem gezeigten Ausführungsbeispiel über die mit der Steuer- und Kontrolleinrichtung 2 verbundene und von einem Fuß 25 einer nicht weiter dargestellten Bedienperson betätigbaren Steuer- und Regelvorrichtung 1, die im unmittelbaren Bedienbereich der Biegepresse 3 auf einer Aufstandsfläche 26 und für die Bedienkräft ergonomisch positioniert auf einer Aufstandsfläche 26 und ortsveränderbar aufgelagert ist.

Ebenso besteht jedoch auch die Möglichkeit, die Steuer- und Regelvorrichtung 1 unmittelbar an einer Vorderseite des feststehenden Pressenbalkens 4 der Biegepresse 3 anzuordnen, beispielsweise auf einen linear verstellbaren Schlitten, um sie in ihrer Lage an die jeweilige Arbeitsposition der Bedienkraft ergonomisch zu positionieren.

Die Steuer- und Regelvorrichtung 1 weist nach dem gezeigten Ausführungsbeispiel ein auf der Aufstandsfläche 26 auflagerbares Schutzgehäuse 27 mit einer Bodenplatte 28 und einem Gehäuseoberteil 29 auf, in dem eine Zutrittsöffnung 30 für den Fuß 25 der Bedienkraft vorgesehen ist..

Im Inneren des Gehäuseoberteils 29 ist auf der Bodenplatte 28 in einer Schwenklageranordnung 31 ein pedalartiges Stellelement 32 schwenkbar gelagert, welches über die Zutrittsöffnung 30 für die Betätigung mit dem Fuß 25 in einer geneigten Lage durch die Wirkung einer Federanordnung 33 gegen ein Anschlagmittel 34, beispielsweise ein Steg des Gehäuseoberteils 29, in der geneigten Lage in einer ersten Endstellung 35 positioniert ist.

Ausgehend von dieser Endstellung 35 ist das Stellelement 32 durch Aufbringung einer Kraft - gemäß Pfeil 36 - durch den Fuß 25 um einen Winkel 37 entgegen der Wirkung der Federanordnung 33, bevorzugt mit progressiver Federkennlinie, gegen ein weiteres im Gehäuseoberteil 29 angeordnetes Anschlagmittel 38, in eine weitere Endstellung 39 schwenkbar.

Im Schutzgehäuse 27 ist ein Bewegungsprofil-Erfassungsmittel 40, beispielsweise auf der Bodenplatte 28, befestigt, das nach dem gezeigten Ausführungsbeispiel durch ein Linearpotentiometer 41 gebildet ist. Über einen Stelltrieb 42 wird die Schwenkbewegung des Stellelementes 32 auf das Linearpotentiometer 41 zur Abgabe eines Steuerungssignals an die Steuer-und Kontrolleinrichtung übertragen.

Das Steuerungssignal ist beispielsweise eine Stromsignals bei einem induktiven, oder ein Spannungssignal bei einem kapazitiven Bewegungsprofil-Erfassungsmittel 40.

Weiter ist im Schutzgehäuse 27 ein mit dem Bewegungsprofil-Erfassungsmittel 40, z.B. dem Linearpotentiometer 41 leitungsverbundenes Logikmodul 45 mit einem Prozessor 46 und einer Erfassungs- und Auswerteschaltung 47 angeordnet. Das Logikmodul 45 ist beispielsweise über eine Leitung 48 mit der Steuer- und Kontrolleinrichtung 2 der Biegepresse 3 verbunden. Selbstverständlich kann auch eine drahtlose Kommunikationsverbindung, z.B. Funk, Licht etc., vorgesehen sein.

Die Schwenkbewegung des Stellelementes 32 um eine Schwenkachse 49 wird über den Stelltrieb 42, zum Beispiel eine Gelenksverbindung als mechanische Koppelung, auf einen Aktuator 50 des Linearpotentiometers 41 zu Abgabe eines entsprechend der Stellung des Stellelementes 32 stellungsbezogenen Steuerungssignals übertragen.

Den Endstellungen 35, 39 ist dabei jeweils ein Steuerungssignal für eine Stopp- Stellung des Pressenbalkens 8 zugeordnet, wobei die Endstellung 35 der Ausgangslage des Pressenbalkens, also der oberen Endlage 13 entspricht und die Endstellung 39 einen Not- Stopp für einen Sicherheitsstopp entspricht, in der der Pressenbalken 8 entweder in der momentanen Stellung still gesetzt wird oder auf Rückhub in seine obere Endlage 13 umgesteuert wird.

Durch das vom Bewegungsprofil-Erfassungsmittel 40 bzw. dem Linearpotentiometer 41 abgegebene Steuerungssignal bei einer Auslenkung des Stellelementes 32 durch Aufbringung einer Verstellkraft - gemäß Pfeil 36 - aus seiner Endlage 35 in Richtung der weiteren Endlage 39, wird der Umformzyklus über das Logikmodul 45 mit dem Prozessor 46 und der Erfassungs- und Auswerteschaltung 47 an die Steuer- und Kontrolleinrichtung 2 geleitet und der Bewegungsablauf des verstellbaren Pressenbalkens 8 entsprechend den hinterlegten Programmvorgaben für den entsprechenden Umformvorgang gestartet.

Selbstverständlich kann anstelle des beschriebenen Linearpotentiometer 41 auch ein inkrementelles Linear- Wegmesssystem als Bewegungsprofil- Erfassungsmittel 40 zur Anwendung gebracht werden.

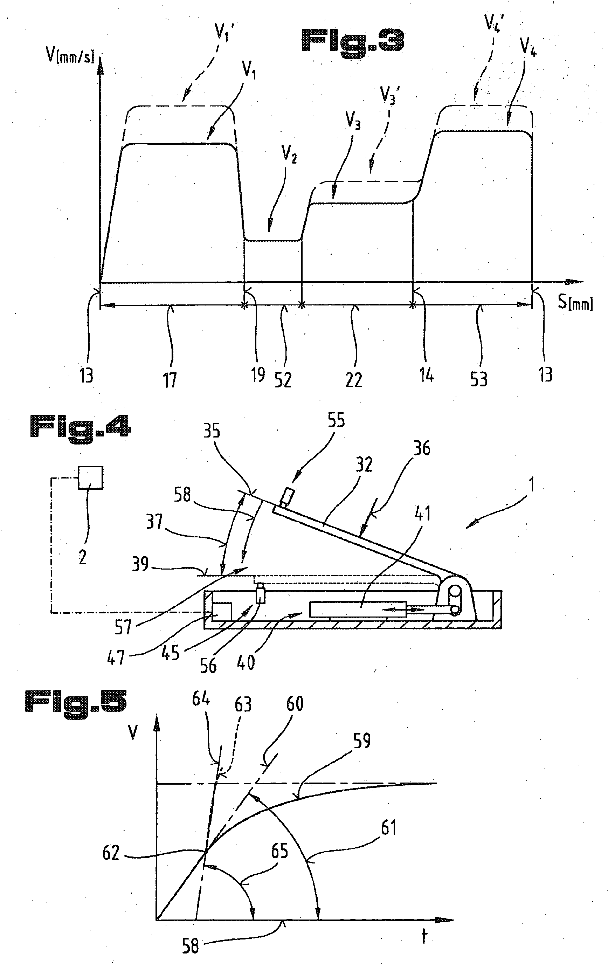

Anhand des Fig. 3 gezeigten Diagramms wird nun der Verstellzyklus für einen Umformhub und Rückhub des verstellbaren Pressenbalkens im Detail näher erläutert.

Das Diagramm gibt in vollen Linien die Verstellgeschwindigkeit des Pressenbalkens, z.B. [mm/s], in den einzelnen Hubbereichen, z.B. [mm], wieder, wie beispielweise für einen bestimmten Umformvorgang an einem Werkteil in einem Datenspeicher der Steuer- und Kontrollvorrichtung der Biegepresse hinterlegt.

Die Verstellbereiche sind, wie bereits zu Fig.1 beschrieben, im Wesentlichen ausgehend von der oberen Endlage 13 des Pressenbalkens 8
- der Eilhubbereich 17, bei dem die Werkzeugspitze 18 des Biegewerkzeuges 9 durch Verstellung des Pressenbalkens 8 mit relativ hoher Verstellgeschwindigkeit V1[mm/s] bis auf den Abstand 19 von der Oberseite 20 des umzuformenden Werkteils 12 bewegt wird, wobei der Abstand 19 einen vorgegebenen Sicherheitsabstand darstellt durch den Verletzungen der Bedienkraft bei einer unsachgemäßen Bedienung vermieden werden sollen;
- dem folgt ein Anstellhub 52 der Werkzeugspitze 18 des Biegewerkzeuges 9 mit stark reduzierter Verstellgeschwindigkeit V2[mm{s] bis zum Aufsetzten der Werkzeugspitze 18 auf der Oberseite 20 des Werkteils 12;
- nach dem Aufsetzten der Werkzeugspitze 18 auf der Oberseite 20 des Werkteils 12 erfolgt der eigentliche Umformhub 22 mit gegebenenfalls gegenüber dem Anstellhub 52 wieder erhöhter Verstellgeschwindigkeit V3[mm/s] bis zum Erreichen der Eintauchtiefe 23, welche von einer Werkzeuggeometrie, Werkteildicke, dem vorgegebenen Biegewinkel und etwaiger Materialparameter abhängig ist, und womit die Endlage 14, auch Umkehrpunkt genannt, erreicht ist;
- ab dem sog. Umkehrpunkt, bzw. dem Erreichen der unteren Endlage 14 erfolgt ein Rückhub 53 der Pressenbalken 8 bei relativ hoher Geschwindigkeit V4[mm/s] bis zum Erreichen der oberen Endlage 13.

Dem Rückhub 53 ist eventuell ein Entlastungshub zu einer Entspannung der Biegepresse und des Werkteils, sog. Rückfedern zu erreichen, wobei dies für eine Winkelkontrolle, und damit für eine Kontrolle der Umformqualität mit einem Winkelmessverfahren wesentlich ist.

Wie in der Fig. 3 weiter in unterbrochenen Linien dargestellt ist steuerungsmäßig eine manuelle Geschwindigkeitregelung der Verstellung des Pressenbalkens 8 für vorgegebene Verstellbereiche, insbesondere für den Bereich des Eilhubes 17, des Rückhubes 53 und Umformhubes 22 über die Stellung des Stellelementes 32 vorzunehmen.

In diesen Bereichen kann die vorgegebene Verstellgeschwindigkeit "V"[mm/s] des Pressenbalkens 8 in Abhängigkeit der Stellung des Stellelementes 32 zur Reduktion der Zykluszeit manuell erhöht werden.

Umgesetzt wird dies über die stellungsabhängigen Steuerungssignale des Bewegungsprofil-Erfassungsmittels 40 und der Erfassungs- und Auswerteschaltung 47 des Logikmoduls 45.

Über die Steuer- und Regelvorrichtung 1 und dem Bewegungsprofil-Erfassungsmittel 40 wird weiter bei Erreichung der Endstellung 39 des Stellelementes 32 ein Steuersignal an die Steuer- und Kontrolleinrichtung 2 generiert das einen, Not-Stopp bewirkt.

Vorteilhaft ist vorgesehen, dass zur Erreichung der Endstellung 39 des Stellelementes 32 ein erhöhter Verstellwiderstand, z.B. durch ein der Schwenkbewegung des Stellelementes entgegen wirkendes Bremsmittel, zu überwinden ist, wodurch der Bedienungskraft das Ende des Regelbereiches für die Verstellgeschwindigkeit angezeigt wird.

Der Not-Stopp kann einerseits zu einem Stillsetzten des weiteren Bewegungsablaufes führen, wobei die bei Auslösen des Signals erreichte Stellung des Pressenbalkens 9 entweder beibehalten oder auf Rückhub 53 umgeregelt wird und der Pressenbalken 9 in seine obere Endlage 13 rückgeführt wird,

Als weitere Funktion der Steuer- und Regelvorrichtung 1 mit dem Bewegungsprofil-Erfassungsmittel 40 und der Erfassungs- und Auswerteschaltung 47 des Logikmoduls 45 ist vorgesehen, dass hervorgerufen durch eine Schreckreaktion der Bedienungskraft in einem Gefahrenzustand, bei der intuitiv das Stellelement 32 in Richtung der Endstellung belastet wird, aus dem stellungsabhängigen Steuerungssignal des Bewegungsprofil- Erfassungsmittels 40 Änderung des Steuerungssignal, z.B. Stromstärke, Spannung etc, bezogen auf eine Zeiteinheit, z.B. [ms], also einer Regelkurve die Beschleunigung der Verstellbewegung des Stellelementes 32 in der Erfassungs- und Auswerteschaltung 40 als Ist- Wert zu erfassen und mit einem vorgegebenen Beschleunigungs- Schwellwert zu vergleichen und bei einem Überschreiten des vorgegebenen Beschleunigungs- Schwellwert durch den Ist- Wert, unabhängig von der Momentanstellung des Stellelementes ein Signal für einen Not- Stopp zu generieren und damit die Verstellbewegung des Pressenbalkens 8 zu stoppen.

Der Vorgang des Not- Stopps wird unmittelbar, unabhängig von der Momentanstellung des Stellelementes 32, bei Feststellung einer Überschreitung des Schwellenwertes, aktiviert - wobei die dem Stellbereich zugeordnete stellungs- bzw. verstellungsabhängige Geschwindigkeitsregelung für die Verstellbewegung des Pressenbalkens deaktiviert wird. Damit kommt es zu einem augenblicklichen Stillstand des Pressenbalkens ohne wesentlichen Nachlauf.

Die Fig. 4 zeigt in vereinfachter Darstellung die Steuer- und Regelvorrichtung 1 und wird anhand des in Fig. 5 wiedergegebenen Diagrammes ein möglicher Regelvorgang für eine manuelle Geschwindigkeitsregelung in den vorgegebenen Hubbereichen wie diese bereits vorhergehend definiert worden sind, erläutert.

Nach diesem Ausführungsbeispiel sind in den Endstellungen (35, 39) des pedalartigen Stellelementes 32 Schaltmittel 55, z.B. Endschalter 56, Näherungsschalter etc. angeordnet bei deren Kontakt durch das Stellelementes 32 ein Stopp- Signal für die Verstellung des nicht weiter dargestellten Pressenbalken abgegeben wird.

In einem Verstellbereich 57 in dem Winkel 37 zwischen den Endstellungen (35, 39) werden durch eine Betätigung des Stellelementes über das Bewegungsprofil- Erfassungsmittel 40, z.B. dem Linearpotentiometer 41, mit fortschreitender Winkelstellung - gemäß Pfeil 58-Steuerungssignale für die manuelle Geschwindigkeitsregelung in den vorgegebenen Hubbereichen, die über das nicht weiter dargestellte Wegmesssystem erfasst sind, mit steigender Signalstärke, zB. als Stromstärke "I", oder Stromspannung bei kapazitivem Erfassungsmittel, an das Logikmodul 45 mit der Erfassungs- und Auswerteschaltung 47 und als Steuerungssignale an die mit dem Logikmodul 45 kommunikationsverbundene Steuer- und Kontrolleirichtung 2 der Biegepresse 3 abgegeben.

In dem Diagramm - Fig. 5 - ist ein möglicher Bewegungsablauf einer Verstellbewegung des Stellelementes wobei der Kurvenverlauf einer Regelkurve 59 einer Signalstärke des Bewegungsprofil- Erfassungsmittels 40 bei zunehmender Winkelstellung des Stellelementes 32 wiedergibt.

Als Steuerungsparameter ist weiter in der Erfassungs- und Auswerteschaltung 47 ein Schwellenwert für eine festgelegte Maximalbeschleunigung - als Kurven- Steigungsgerade 60 mit dem Steigungswinkel 61 dem Diagramm - Fig. 5 - zu entnehmen, hinterlegt.

Bei einem Überschreiten des Schwellenwertes, z.B. bei einer Schockreaktion der Bedienungskraft - Punkt 62 - bei Auftreten einer Gefahrensituation, bei der intuitiv das Stellelement 32 ruckartig durch Aufbringung einer Betätigungskraft - gemäß Pfeil 36 - bewegt wird und damit der vorgegebene Schwellenwert überschritten wird, wie durch die entsprechend des geänderten in unterbrochenen Linien gezeigten Kurvenverlaufes - gemäß 63 - für die Beschleunigung "B" und einer resultierenden Steigungsgerade 64 mit einem Steigungswinkel 65 in dem Diagramm gezeigt, wird ein Steuerungssignal für einen Not- Stopp in der Erfassungs- und Auswerteschaltung 47 generiert und an die Steuer- und Kontrolleinrichtung 2 der Biegepresse geleitet und die Verstellbewegung des Pressenbalkens augenblicklich gestoppt.

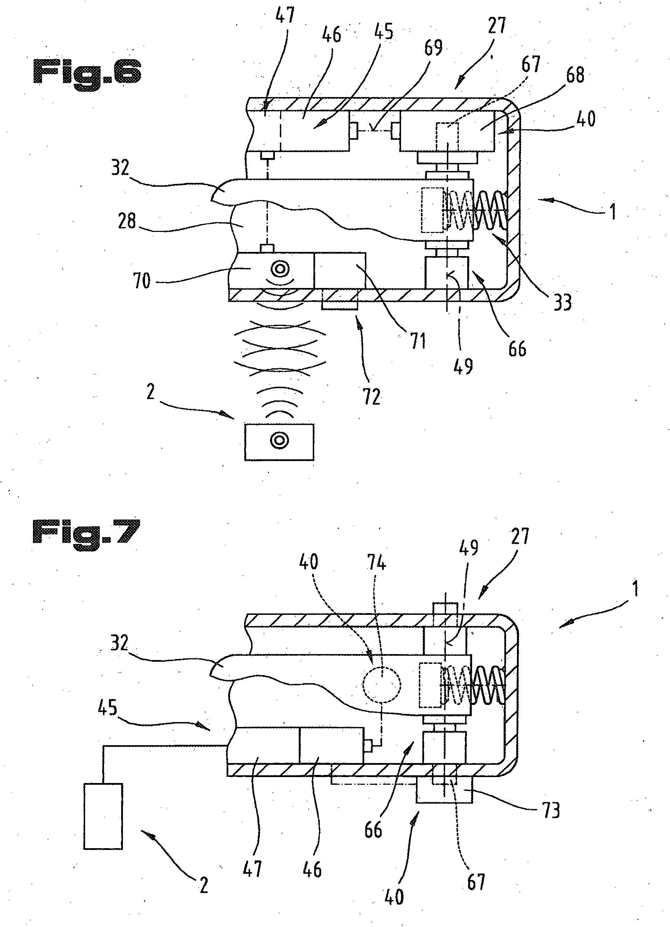

In der Fig. 6 ist eine weitere Ausbildung der Steuer- und Regelvorrichtung 1 in Draufsicht auf einen Teilbereich bei geöffnetem Schutzgehäuse 27 gezeigt.

In dem Schutzgehäuse 27 ist das pedalartige Stellelement 32 um die Schwenkachse 49 einer Schwenklageranordnung 66 schwenkbar gelagert und über die Federanordnung 33 in einer winkelig geneigten Lage, wie bereits vorhergehend beschrieben, ausgerichtet und gegen die Kraft der Federanordnung 33 in Richtung der Bodenplatte 28 schwenkbar.

In fluchtender Ausrichtung mit der Schwenkachse 49 ist im Schutzgehäuse 27 das Bewegungsprofil-Erfassungsmittel 40, ein Drehpotentiometer 68, angeordnet, das mit einem Achsstuinmel 67 der Schwenklageranordnung 66 bewegungsgekuppelt ist.

Mittels des Drehpotentiometer 68, welches über eine Leitung 69 mit dem Logikmodul 45 mit dem Prozessor 46 und der Erfassungs- und Auswerteschaltung 47 entsprechend der Schwenkbewegung des Stellelementes 37 Steuersignale für die bereits vorhergehend beschriebene Geschwindigkeitsregelung und Not-Stopp-Funktion generiert und nach dem gezeigten Ausführungsbeispiel über ein Signalsende- und Signalempfangsmodul 70 an die nicht weiter gezeigte Steuer- und Kontrolleinrichtung der Biegepresse geleitet werden.

Wie weiters zu entnehmen ist bei dieser Ausführung der Steuer- und Regelvorrichtung 1 die Energieversorgung über einen im Schutzgehäuse 27 angeordneten, wiederaufladbaren Energiespeicher 71, z.B. Akku, vorgesehen, der mit einem das Schutzgehäuse 27 durchragenden Andockmittel 72 für eine Energiezufuhr versehen ist.

Selbstverständlich kann anstelle des beschriebenen Drehpotentiometers 68 auch ein inkrementeller Drehgeber als Bewegungsprofil- Erfassungsmittel 40 zur Anwendung gebracht werden.

In der Fig. 7 ist eine andere Ausbildung der Steuer- und Regelvorrichtung 1 in Draufsicht bei geöffnetem Schutzgehäuse 27 und eines Teilbereiches gezeigt.

Nach diesem Ausführungsbeispiel wird zusätzlich zu einem mit dem Logikmodul 45 mit dem Prozessor 46 und der Erfassungs- und Auswerteschaltung 47 verbundenen, in diesem Fall außerhalb des Schutzgehäuses 27 angeflanschten und mit dem Achsstummel 67 der Schwenklageranordnung 66 antriebsverbundenen Drehwinkelgeber 73 für eine Signalgenerierung, ausgehend von der Schwenkbewegung des Stellelementes 32 ein weiteres Bewegungsprofil-Erfassungsmittel 40, in Form eines auf einer Unterseite des Stellelementes befestigten Beschleunigungssensor 74 vorgesehen, der ebenfalls mit dem Logikmodul 45 leitungsverbunden ist.

Mittels dieses Beschleunigungssensors 74, zum Beispiel ein piezoelektrischer Beschleunigungssensor, kann unmittelbar und unabhängig von den generierten Steuersignalen für die Regelung der Verstellgeschwindigkeit des Pressenbalkens eine, einen Vorgabewert für eine Beschleunigung bei der Betätigung des Stellelementes 32 durch eine Schockreaktion, wie bereits vorhergehend beschrieben, bewirkte Beschleunigungsbewegung des Stellelementes 32 ermittelt und in ein entsprechendes Steuerungssignal für einen Not- Stopp des Pressenbalkens in der Erfassungs- und Auswerteschaltung 47 generiert und an die Steuer- und Kontrolleinrichtung 2 der Biegepresse geleitet werden.

Die Ausführungsbeispiele zeigen mögliche Ausführungsvarianten der Steuer- und Regelvorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Steuer- und Regelvorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

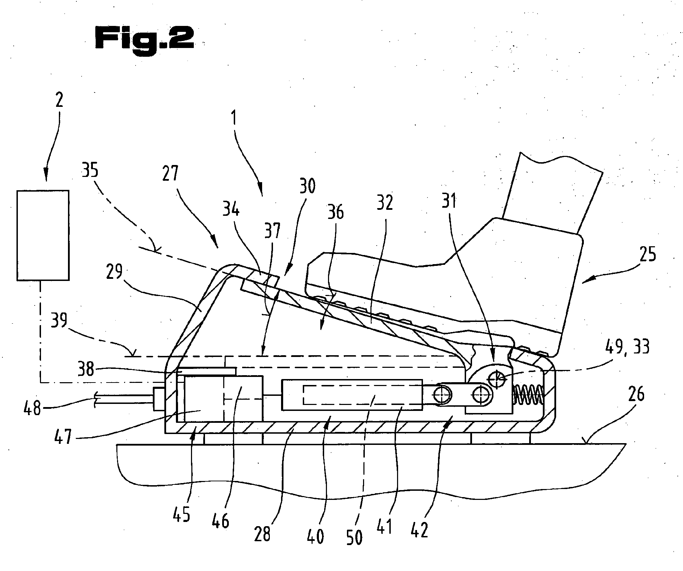

Vor allem können die einzelnen in den Fig. 1, 2; 6; 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Steuer-und Regelvorrichtung | 41 | Linearpotentiometer |
| 2 | Steuer- und Kontrolleinrichtung | 42 | Stelltrieb |
| 3 | Biegepresse | 43 | |
| 4 | Pressenbalken | 44 | |
| 5 | Biegewerkzeug | 45 | Logikmodul |
| | | | |
| 6 | Antriebsmittel | 46 | Prozessor |
| 7 | Antriebsanordnung | 47 | Erfassungs- und Auswerteschaltung |
| 8 | Pressenbalken | 48 | Leitung |
| 9 | Biegewerkzeug | 49 | Schwenkachse |
| 10 | Hydraulikzylinder | 50 | Aktuator |
| | | | |
| 11 | Hydrauliksystem | 51 | |
| 12 | Werkteil | 52 | Anstellhub |
| 13 | Endlage | 53 | Rückhubbereich |
| 14 | Endlage | 54 | |
| 15 | Abkantwinkel | 55 | Schaltmittel |
| | | | |
| 16 | Wegmesssystem | 56 | Endschalter |
| 17 | Eilhubbereich | 57 | Verstellbereich |
| 18 | Werkzeugspitze | 58 | Pfeil |
| 19 | Abstand | 59 | Regelkurve |
| 20 | Oberseite | 60 | Steigungsgerade |
| | | | |
| 21 | Anstellhub | 61 | Steigungswinkel |
| 22 | Umformhub | 62 | Punkt |
| 23 | Eintauchtiefe | 63 | Kurve |
| 24 | V-Ausnehmung | 64 | Steigungsgerade |
| 25 | Fuß | 65 | Steigungswinkel |
| | | | |
| 26 | Aufstandsfläche | 66 | Schwenklageranordnung |
| 27 | Schutzgehäuse | 67 | Achs stummel |
| 28 | Bodenplatte | 68 | Drehpotentiometer |
| 29 | Gehäuseoberteil | 69 | Leitung |
| 30 | Zutrittsöffnung | 70 | Signal-Sende- und Empfangsmodul |
| | | | |
| 31 | Schwenklageranordnung | 71 | Energiespeicher |
| 32 | Stellelement | 72 | Andockmittel |
| 33 | Federanordnung | 73 | Drehwinkelgeber |
| 34 | Anschlagmittel | 74 | Beschleunigungsmesssensor |
| 35 | Endstellung | | |
| | | | |
| 36 | Pfeil | | |
| 37 | Winkel | | |
| 38 | Anschlagmittel | | |
| 39 | Endstellung | | |
| 40 | Bewegungsprofil-Erfassungsmittel | | |

## Patentansprüche

1. Steuer- und Regelvorrichtung (1) für eine Antriebsanordnung (7) eines verstellbaren Pressenbalkens (8) einer Biegepresse (3), insbesondere Abkantpresse, mit einem, eine Zutrittsöffnung (30) für einen Fuß (25) einer Bedienperson aufweisenden Schutzgehäuse (27) und mit einem im Schutzgehäuse (27) angeordneten pedalartigen Stellelement (32) mit einem durch Endstellungen (35, 39) begrenzten Verstellbereich (57) und mit zumindest einem mit dem Stellelement (32) zugeordneten, mit einer Steuer- und Kontrolleinrichtung (2) der Biegepresse (3) kommunikationsverbundenem Erfassungsmittel, wobei das Erfassungsmittel durch ein mit dem Stellelement (32) bewegungsverbundenes Bewegungsprofil- Erfassungsmittel (40) zur Erfassung von stellungsbezogenen Steuersignalen gebildet ist, **dadurch gekennzeichnet, dass** das Bewegungsprofil- Erfassungsmittel (40) mit einem, eine Erfassungs- und Auswerteschaltung (47) mit einem Prozessor (46) aufweisenden Logikmodul (45) kommunikationsverbunden ist, und der Prozessor (46) zum Generieren von Steuerungssignalen für eine Geschwindigkeitsregelung einer Verstellbewegung eines verstellbaren Pressenbalkens (8) der Biegepresse (3) aus den erfassten Steuersignalen und zur Weiterleitung der Steuerungssignale an die Steuer- und Kontrolleinrichtung der Biegepresse ausgebildet ist, wobei nach diesen Steuerungssignalen die Verstellgeschwindigkeit des Pressenbalkens (8) für definierte Hubbereiche eines gesamten Verstellzyklus des Pressenbalkens (8), unabhängig von einer programmgemäß in einem Datenspeicher der Steuer- und Kontrolleinrichtung (2) hinterlegten Verstellgeschwindigkeit geregelt wird und wobei in dem Verstellbereich (57) des Stellelementes (32) zwischen den Endstellungen (35, 39) in der Erfassungs- und Auswerteschaltung (47) des Logikmoduls (45) aus einer zeitbezogenen Signalabfolge der Bewegungsprofil- Erfassungsmittels (40) ein Beschleunigungsprofil der Verstellbewegung des Stellelementes (32) ermittelt und mit einem hinterlegten Schwellenwert verglichen und bei einer Überschreitung des Schwellenwert ein Steuerungssignal als Not- Stopp Signal generiert und an die Steuer- und Kontrolleinrichtung (2) der Biegepresse (3) geleitet wird und dadurch die Verstellbewegung des Pressbalkens (8) gestoppt wird.

2. Steuer- und Regelvorrichtung (1) nach Anspruch 1, **dadurch gekennzeichnet, dass** das Logikmodul (45) im Schutzgehäuse (27) der Steuer- und Regelvorrichtung (1) angeordnet ist.

3. Steuer- und Regelvorrichtung (1) nach Anspruch 1, **dadurch gekennzeichnet, dass** das Logikmodul (45) in der Steuer- und Kontrolleinrichtung (2) der Biegepresse (3) angeordnet ist.

4. Steuer- und Regelvorrichtung (1) nach Anspruch 1, **dadurch gekennzeichnet, dass** das Bewegungsprofil- Erfassungsmittel (40) durch einen mit dem Stellelement (32) bewegungsgekoppelten Beschleunigungsmesssensor (74) gebildet ist.

5. Steuer- und Regelvorrichtung (1) nach Anspruch 1, **dadurch gekennzeichnet, dass** das Bewegungsprofil- Erfassungsmittel (40) zur Erfassung einer Verstellbewegung des Stellelementes (32) durch ein Linearpotentiometer (41) gebildet ist..

6. Steuer- und Regelvorrichtung (1) nach Anspruch 1, **dadurch gekennzeichnet, dass** das Bewegungsprofil- Erfassungsmittel (40) zur Erfassung einer Verstellbewegung des Stellelementes (32) durch ein Drehpotentiometer (68) gebildet ist.

7. Steuer- und Regelvorrichtung (1) nach Anspruch 1, **dadurch gekennzeichnet, dass** das Bewegungsprofil- Erfassungsmittel (40) zur Erfassung einer Verstellbewegung des Stellelementes (32) durch einen inkrementellen Drehgeber gebildet ist.

8. Steuer- und Regelvorrichtung (1) nach Anspruch 1, **dadurch gekennzeichnet, dass** das Bewegungsprofil- Erfassungsmittel (40) zur Erfassung einer Verstellbewegung des Stellelementes (32) durch ein inkrementelles Linear- Wegmesssystem gebildet ist.

9. Steuer- und Regelvorrichtung (1) nach Anspruch 1, **dadurch gekennzeichnet, dass** das Bewegungsprofil- Erfassungsmittel (40) zur Erfassung einer Verstellbewegung des Stellelementes (32) durch einen Scanner gebildet ist.

10. Steuer- und Regelvorrichtung (1) nach Anspruch 1, **dadurch gekennzeichnet, dass** das Bewegungsprofil- Erfassungsmittel (40) durch einen piezoelektrischen Messsensor, insbesondere einem mikro- elektro- mechanischen System gebildet ist.

11. Steuer- und Regelvorrichtung (1) nach Anspruch 1, **dadurch gekennzeichnet, dass** das Stellelement (32) in einer Schwenklageranordnung (31) im Schutzgehäuses (27) schwenkbar gegen die Wirkung einer Rückstellkraft einer Federanordnung (33) um einen Schwenkwinkel (37) aus einer Ausgangsstellung (35) in eine Endstellung (39) verstellbar ist.

12. Steuer- und Regelvorrichtung (1) nach Anspruch 11, **dadurch gekennzeichnet, dass** das Bewegungsprofil- Erfassungsmittel (40) in der Schwenklageranordnung (31) integriert angeordnet ist.

13. Steuer- und Regelvorrichtung (1) nach Anspruch 1, **dadurch gekennzeichnet, dass** das Bewegungsprofil- Erfassungsmittel (40) in einer Linearführungsanordnung eines Stelltriebes (42).integriert angeordnet ist.

14. Steuer- und Regelvorrichtung (1) nach Anspruch 1, **dadurch gekennzeichnet, dass** Aus- und Eingangsschnittstellen des Logikmoduls (45) der Steuer- und Regelvorrichtung (1) und der Steuer- und Kontrolleinrichtung (2) der Biegepresse (3) jeweils ein Signal- Sende- und Empfangsmodul (70) aufweisen.

15. Verfahren zum Betrieb einer Biegepresse, mit einer Steuer- und Regelvorrichtung (1) mit einem, eine Zutrittsöfnnung (30) für einen Fuß (25) einer Bedienperson aufweisenden Schutzgehäuse (27) und mit einem im Schutzgehäuse (27) angeordneten pedalartigen Stellelement (32) und mit zumindest einem diesem zugeordneten, mit einer Steuer- und Kontrolleinrichtung (2) der Biegepresse (3) kommunikationsverbundenen Erfassungsmittel, wobei in einem durch Endstellungen (35,39) des Stellelementes (32) begrenzten Verstellbereich (57) des Stellelementes (32) stellungsbezogene Steuersignale durch zumindest ein mit dem Stellelement (32) bewegungsverbundenes Bewegungsprofil- Erfassungsmittel (40) erfasst werden, **dadurch gekennzeichnet, dass** die Steuersignale in einem Prozessor (46) einer mit dem Bewegungsprofil- Erfassungsmittel (40) kommunikationsverbundenen Erfassungs- und Auswerteschaltung (47) eines Logikmoduls (45) als Steuerungssignale für eine Geschwindigkeitsregelung einer Verstellbewegung eines verstellbaren Pressenbalkens (8) der Biegepresse (3) generiert und an die Steuer- und Kontrolleinrichtung (2) der Biegepresse (3) geleitet werden und nach diesen Steuerungssignalen die Verstellgeschwindigkeit des Pressenbalkens (8) für definierte Hubbereiche eines gesamten Verstellzyklus des Pressenbalkens (8), unabhängig von einer programmgemäß in einem Datenspeicher der Steuer- und Kontrolleinrichtung (2) hinterlegten Verstellgeschwindigkeit geregelt wird und dass in dem Verstellbereich (57) des Stellelementes (32) zwischen den Endstellungen (35, 39) in der Erfassungs- und Auswerteschaltung (47) des Logikmoduls (45) aus einer zeitbezogenen Signalabfolge der Bewegungsprofil- Erfassungsmittels (40) ein Beschleunigungsprofil der Verstellbewegung des Stellelementes (32) ermittelt und mit einem hinterlegten Schwellenwert verglichen und bei einer Überschreitung des Schwellenwert ein Steuerungssignal als Not- Stopp Signal generiert und an die Steuer- und Kontrolleinrichtung (2) der Biegepresse (3) geleitet wird und dadurch die Verstellbewegung des Pressbalkens gestoppt wird.

16. Verfahren nach Anspruch 15, **dadurch gekennzeichnet, dass** die Steuerungssignale aus einem am Logikmodul (45) mit der Erfassungs- und Auswerteschaltung (47) anliegenden Stromstärkepotential des Bewegungsprofil- Erfassungsmittels (40) generiert werden.

17. Verfahren nach Anspruch 15, **dadurch gekennzeichnet, dass** die Steuerungssignale aus einem am Logikmodul (45) mit der Erfassungs- und Auswerteschaltung (47) anliegenden Stromspannungspotential des Bewegungsprofil- Erfassungsmittel (40) generiert werden.

18. Verfahren nach Anspruch 15, **dadurch gekennzeichnet, dass** die Steuerungssignale aus Daten eines mit der Erfassungs- und Auswerteschaltung (47) des Logikmoduls (45) verbundenem Drehwinkelgebers (73) generiert werden.

19. Verfahren nach Anspruch 15, **dadurch gekennzeichnet, dass** das Beschleunigungsprofil des Stellelementes (32) in einem Prozessor (46) des Logikmoduls (45) aus einer Funktion von Delta "v(Geschwindigkeit)" zu Delta "t(Zeit)" aus dem Bewegungsprofil des Stellelementes (32) erstellt und mit dem vorgegebenen Schwellenwert für die Verstellbewegung des Stellelementes (32) verglichen wird und bei einer Überschreitung des Schwellenwertes in der Erfassungs- und Auswerteschaltung (47) das Steuerungssignal als Not- Aus Signal generiert und an die Steuer- und Kontrolleinrichtung (2) der Biegepresse (3)übermittelt wird.

20. Verfahren nach Anspruch 15 oder 19, **dadurch gekennzeichnet, dass** im Logikmodul (45) das Beschleunigungsprofil des Stellelementes (32) durch Messwerte eines Beschleunigungsmesssensor (74), insbesondere eines mikro-elektro-mechanischen Systems erstellt wird.

## Claims

1. Open- and closed-loop control device (1) for a for a drive arrangement (7) of a displaceable press beam (8) of a bending press (3), in particular a press brake, comprising a protective housing (27) having an access orifice (30) for a foot (25) of an operator, and comprising a pedal-type actuating element (32) disposed in the protective housing (27) with a displacement range (57) limited by end positions (35, 39), and at least one detection means assigned to the actuating element (32) connected so as to communicate with a control and monitoring system (2) of the bending press (3), and the detection means is provided in the form of a motion profile detection means (40) connected to the actuating element (32) so as to move in unison with it in order to detect position-related signals, **characterized in that** the motion profile detection means (40) is connected so as to communicate with a logic module (45) incorporating a detection and evaluation circuit (47) incorporating a processor (46), and the processor (46) is configured to generate control signals for a speed regulation of a displacing movement of a displaceable press beam (8) of the bending press (3) from the detected control signals and forward the control signals to the control and monitoring system of the bending press, and the displacement speed of the press beam (8) is regulated on the basis of these control signals for defined stroke ranges of an overall displacement cycle of the press beam (8) irrespective of a displacement speed stored in a data memory of the control and monitoring system (2) as part of a program, and an acceleration profile of the displacing movement of the actuating element (32) in the displacement range (57) of the actuating element (32) between the end positions (35, 39) is determined in the detection and evaluation circuit (47) of the logic module (45) from a time-related signal sequence of the motion profile detection means (40) and compared with a stored threshold value, and if the threshold value is exceeded, a control signal in the form of an emergency stop signal is generated and forwarded to the control and monitoring system (2) of the bending press (3) and the displacing movement of the press beam (8) is halted as a result.

2. Open- and closed-loop control device (1) according to claim 1, **characterized in that** the logic module (45) is disposed in the protective housing (27) of the open- and closed-loop control device (1).

3. Open- and closed-loop control device (1) according to claim 1, **characterized in that** the logic module (45) is disposed in the control and monitoring system (2) of the bending press (3).

4. Open- and closed-loop control device (1) according to claim 1, **characterized in that** the motion profile detection means (40) is provided in the form of an acceleration sensor (74) coupled with the actuating element (32) so as to move in unison with it.

5. Open- and closed-loop control device (1) according to claim 1, **characterized in that** the motion profile detection means (40) is configured to detect a displacing movement of the actuating element (32) by means of a linear potentiometer (41).

6. Open- and closed-loop control device (1) according to claim 1, **characterized in that** the motion profile detection means (40) is configured to detect a displacing movement of the actuating element (32) by means of a rotary potentiometer (68).

7. Open- and closed-loop control device (1) according to claim 1, **characterized in that** the motion profile detection means (40) is configured to detect a displacing movement of the actuating element (32) by means of an incremental rotary position transducer.

8. Open- and closed-loop control device (1) according to claim 1, **characterized in that** the motion profile detection means (40) is configured to detect a displacing movement of the actuating element (32) by means of an incremental linear distance measuring system.

9. Open- and closed-loop control device (1) according to claim 1, **characterized in that** the motion profile detection means (40) is configured to detect a displacing movement of the actuating element (32) by means of a scanner.

10. Open- and closed-loop control device (1) according to claim 1, **characterized in that** the motion profile detection means (40) is provided in the form of a piezoelectric measuring sensor, in particular a micro-electro-mechanical system.

11. Open- and closed-loop control device (1) according to claim 1, **characterized in that** the actuating element (32) is mounted in a pivot bearing arrangement (31) in the protective housing (27) so as to be pivotable against the action of a rebound force of a spring arrangement (33) about a pivot angle (37) so as to be displaceable from an initial position (35) into an end position (39).

12. Open- and closed-loop control device (1) according to claim 11, **characterized in that** the motion profile detection means (40) is integrated in the pivot bearing arrangement (31).

13. Open- and closed-loop control device (1) according to claim 1, **characterized in that** the motion profile detection means (40) is integrated in a linear guide arrangement of an actuator drive (42).

14. Open- and closed-loop control device (1) according to claim 1, **characterized in that** output and input interfaces of the logic module (45) of the open- and closed-loop control device (1) and the control and monitoring system (2) of the bending press (3) each have a signal transmitting and receiving module (70).

15. Method of operating a bending press with an open- and closed-loop control device (1) with a protective housing (27) having an access orifice (30) for a foot (25) of an operator and with a pedal-type actuating element (32) disposed in the protective housing (27), and with at least one detection means assigned to the latter connected so as to communicate with a control and monitoring system (2) of the bending press (3), and position-related control signals are detected by means of at least one motion profile detection means (40) connected to the actuating element (32) during displacement in a displacement range (57) of the actuating element (32) limited by end positions (35, 39) of the actuating element (32), **characterized in that** the control signals are generated in a processor (46) of a detection and evaluation circuit (47) of a logic module (45) connected so as to communicate with the motion profile detection means (40) as control signals for a speed regulation of a displacing movement of a displaceable press beam (8) of the bending press (3) and forwarded to the control and monitoring system (2) of the bending press (3), and the displacement speed of the press beam (8) is regulated on the basis of these control signals for defined stroke ranges of an overall displacement cycle of the press beam (8) irrespective of data pertaining to the displacement speed stored in a data memory of the control and monitoring system (2) as part of a program, and an acceleration profile of the displacing movement of the actuating element (32) in the displacement range (57) of the actuating element (32) between the end positions (35, 39) is determined in the detection and evaluation circuit (47) of the logic module (45) from a time-related signal sequence of the motion profile detection means (40) and compared with a stored threshold value, and if the threshold value is exceeded, a control signal in the form of an emergency stop signal is generated and forwarded to the control and monitoring system (2) of the bending press (3) and the displacing movement of the press beam is halted as a result.

16. Method according to claim 15, **characterized in that** the control signals are generated from a current intensity potential of the motion profile detection means (40) applied to the logic module (45) incorporating the detection and evaluation circuit (47).

17. Method according to claim 15, **characterized in that** the control signals are generated from a current-voltage potential of the motion profile detection means (40) applied to the logic module (45) incorporating the detection and evaluation circuit (47).

18. Method according to claim 15, **characterized in that** the control signals are generated from data of an angle of rotation transducer (73) connected to the detection and evaluation circuit (47) of the logic module (45).

19. Method according to claim 15, **characterized in that** the acceleration profile of the actuating element (32) is derived in a processor (46) of the logic module (45) from a function of Delta "v(velocity)" to Delta "t(time)" from the motion profile of the actuating element (32) and compared with the predefined threshold value for the displacing movement of the actuating element (32), and if the threshold value is exceeded, the control signal is generated as an emergency-off signal in the detection and evaluation circuit (47) and transmitted to the control and monitoring system (2) of the bending press (3).

20. Method according to claim 15 or 19, **characterized in that** the acceleration profile of the actuating element (32) is determined in the logic module (45) by means of measurement values of an acceleration sensor (74), in particular a micro-electro-mechanical system.

## Revendications

1. Dispositif de commande et de régulation (1) pour un dispositif d'entraînement (7) d'une barre de presse (8) réglable d'une presse de pliage (3), plus particulièrement une presse à chanfreiner, avec un boîtier de protection (27) comprenant une ouverture d'accès (30) pour un pied (25) d'un opérateur, et avec un élément de réglage (32) sous la forme d'une pédale, avec une plage de réglage (57) limitée par des positions finales (35, 39), disposé dans le boîtier de protection (27), avec au moins un moyen de mesure, correspondant à l'élément de réglage (32) communiquant avec un dispositif de commande et de contrôle (2) de la presse de pliage (3), le moyen de mesure étant constitué d'un moyen de mesure du profil du mouvement (40) relié en mouvement avec l'élément de réglage (32), pour la mesure de signaux de commande relatifs à la position, **caractérisé en ce que** le moyen de mesure de profil du mouvement (40) communiquant avec un module logique (45) comprenant un circuit de mesure et d'analyse (47) avec un processeur (46), et le processeur (46) étant conçu, pour la génération de signaux de commande pour une régulation de vitesse d'un mouvement de réglage d'une barre de presse (8) réglable de la presse de pliage (3) à partir des signaux de commande mesurés et pour la transmission des signaux de commande au dispositif de commande et de contrôle de la presse de pliage, la vitesse de réglage de la barre de presse (8) étant régulée, pour des plages de réglage définies d'un cycle de réglage global de la barre de presse (8), selon ces signaux de commande, indépendamment d'une vitesse de réglage enregistrée dans une mémoire de données du dispositif de commande et de contrôle (2) et, étant déterminée dans la plage de réglage (57) de l'élément de réglage (32), entre les positions finales (35, 39) dans le circuit de mesure et d'analyse (47) du module logique (45) à partir d'une séquence de signaux temporelle du moyen de mesure du profil de mouvement (40), un profil d'accélération du mouvement de réglage de l'élément de réglage (32) et comparée avec la valeur seuil enregistrée et, lors d'un déplacement de la valeur seuil, un signal de commande étant généré en tant que signal d'arrêt d'urgence et transmis au dispositif de commande et de contrôle (2) de la presse de pliage (3) et le mouvement de réglage de la barre de presse (8) étant ainsi arrêté.

2. Dispositif de commande et de régulation (1) selon la revendication 1, **caractérisé en ce que** le module logique (45) se trouve dans le boîtier de protection (27) du dispositif de commande et de régulation (1).

3. Dispositif de commande et de régulation (1) selon la revendication 1, **caractérisé en ce que** le module logique (45) se trouve dans le dispositif de commande et de contrôle (2) de la presse de pliage (3).

4. Dispositif de commande et de régulation (1) selon la revendication 1, **caractérisé en ce que** le moyen de mesure du profil de mouvement (40) est constitué d'un capteur d'accélération (74) couplé en mouvement avec l'élément de réglage (32).

5. Dispositif de commande et de régulation (1) selon la revendication 1, **caractérisé en ce que** le moyen de mesure du profil de mouvement (40) est constitué d'un potentiomètre linéaire (41) pour la mesure d'un mouvement de réglage de l'élément de réglage (32).

6. Dispositif de commande et de régulation (1) selon la revendication 1, **caractérisé en ce que** le moyen de mesure du profil de mouvement (40) est constitué d'un potentiomètre rotatif (68) pour la mesure d'un mouvement de réglage de l'élément de réglage (32).

7. Dispositif de commande et de régulation (1) selon la revendication 1, **caractérisé en ce que** le moyen de mesure du profil de mouvement (40) est constitué d'un capteur de rotation incrémental pour la mesure d'un mouvement de réglage de l'élément de réglage (32).

8. Dispositif de commande et de régulation (1) selon la revendication 1, **caractérisé en ce que** le moyen de mesure du profil de mouvement (40) est constitué d'un système de mesure de trajet linéaire incrémental pour la mesure d'un mouvement de réglage de l'élément de réglage (32).

9. Dispositif de commande et de régulation (1) selon la revendication 1, **caractérisé en ce que** le moyen de mesure du profil de mouvement (40) est constitué d'un scanner pour la mesure d'un mouvement de réglage de l'élément de réglage (32).

10. Dispositif de commande et de régulation (1) selon la revendication 1, **caractérisé en ce que** le moyen de mesure du profil de mouvement (40) est constitué d'un capteur de mesure piézo-électrique, plus particulièrement d'un système micro-électro-mécanique pour la mesure d'un mouvement de réglage de l'élément de réglage (32).

11. Dispositif de commande et de régulation (1) selon la revendication 1, **caractérisé en ce que** l'élément de réglage (32) est réglable, dans un dispositif à palier pivotant (31) dans le boîtier de protection (27), de manière pivotante contre l'action d'une force de rappel d'un dispositif à ressort (33) autour d'un angle de pivotement (37), d'une position initiale (35) vers une position finale (39).

12. Dispositif de commande et de régulation (1) selon la revendication 11, **caractérisé en ce que** le moyen de mesure du profil de mouvement (40) est intégré dans le dispositif à palier pivotant (31).

13. Dispositif de commande et de régulation (1) selon la revendication 1, **caractérisé en ce que** le moyen de mesure du profil de mouvement (40) est intégré dans un dispositif de guidage linéaire d'un entraînement de réglage (42).

14. Dispositif de commande et de régulation (1) selon la revendication 1, **caractérisé en ce que** des interfaces de sortie et d'entrée du module logique (45) du dispositif de commande et de régulation (1) et du dispositif de commande et de contrôle (2) de la presse de pliage (3) comprennent chacun un module d'émission et de réception de signaux (70).

15. Procédé d'utilisation d'une presse de pliage, avec un dispositif de commande et de régulation (1) avec un boîtier de protection (27) comprenant une ouverture d'accès (30) pour un pied (25) d'un opérateur, et avec un élément de réglage (32) sous la forme d'une pédale, disposé dans le boîtier de protection (27), avec au moins un moyen de mesure, correspondant à l'élément de réglage (32) communiquant avec un dispositif de commande et de contrôle (2) de la presse de pliage (3), des signaux de commande relatifs à la position étant mesurés, dans une plage de réglage (57) de l'élément de réglage (32) limitée par les positions finales (35, 39) de l'élément de réglage (32), par au moins moyen de mesure du profil de mouvement (40) relié en mouvement avec l'élément de réglage (32), **caractérisé en ce que** les signaux de commande sont générés dans un processeur (46) d'un circuit de mesure et d'analyse (47) d'un module logique (45), communiquant avec le moyen de mesure de profil du mouvement (40) sous la forme de signaux de commande pour une régulation de vitesse d'un mouvement de réglage d'une barre de presse (8) réglable de la presse de pliage (3) et sont transmis au dispositif de commande et de contrôle (2) de la presse de pliage (3) et, selon ces signaux de commande, la vitesse de réglage de la barre de presse (8) étant régulée pour des plages de course d'un cycle de réglage global de la barre de presse (8), indépendamment d'une vitesse de réglage enregistrée selon un programme dans une mémoire de données du dispositif de commande et de contrôle (2) et **en ce que**, dans la plage de réglage (57) de l'élément de réglage (32) entre les positions finales (35, 39), dans le circuit de mesure et d'analyse (47) du module logique (45), à partir d'une séquence temporelle de signaux du moyen de mesure de profil du mouvement (40), un profil d'accélération du mouvement de réglage de l'élément de réglage (32) est déterminé et comparé à une valeur seuil enregistrée et, lors d'un dépassement de la valeur seuil, un signal de commande est généré sous la forme d'un signal d'arrêt d'urgence et transmis au dispositif de commande et de contrôle (2) de la presse de pliage (3), et le mouvement de réglage de la barre de presse est ainsi arrêté.

16. Procédé selon la revendication 15, **caractérisé en ce que** les signaux de commande sont générés à partir d'un potentiel d'intensité électrique du moyen de mesure de profil du mouvement (40), sur le module logique (45) avec le circuit de mesure et d'analyse (47).

17. Procédé selon la revendication 15, **caractérisé en ce que** les signaux de commande sont générés à partir d'un potentiel de tension électrique du moyen de mesure de profil du mouvement (40), sur le module logique (45) avec le circuit de mesure et d'analyse (47).

18. Procédé selon la revendication 15, **caractérisé en ce que** les signaux de commande sont générés à partir de données d'un capteur d'angle de rotation (73) relié au circuit de mesure et d'analyse (47) du module logique (45).

19. Procédé selon la revendication 15, **caractérisé en ce que** le profil d'accélération de l'élément de réglage (32) est généré dans un processeur (46) du module logique (45) à partir d'une fonction de delta « v(vitesse) » par rapport à delta « t(temps) », à partir du profil du mouvement de l'élément de réglage (32) et comparé avec la valeur seuil prédéterminée pour le mouvement de réglage de l'élément de réglage et, lors d'un dépassement de la valeur seuil dans le circuit de mesure et d'analyse (47), le signal de commande est généré sous la forme d'un signal d'arrêt d'urgence et transmis au dispositif de commande et de contrôle (2) de la presse de pliage (3).

20. Procédé selon la revendication 15 ou 19, **caractérisé en ce que**, dans le module logique (45), le profil d'accélération de l'élément de réglage (32) est généré par des valeurs de mesure d'un capteur de mesure d'accélération (74), plus particulièrement d'un système micro-électro-mécanique.
